# EUROPÄISCHE PATENTANMELDUNG

(11) **EP 4 442 977 A1**
(43) Veröffentlichungstag der Anmeldung: **09.10.2024**
(21) Anmeldenummer: 24161242.3
(22) Anmeldetag: 04.03.2024
(51) Int. Cl.: F02C 3/30, F02C 6/18, F02K 3/06, F28D 7/00, F28D 7/08

(54) **STRÖMUNGSMASCHINE FÜR EINEN FLUGANTRIEB**

(30) Priorität: 24.03.2023 DE 102023107536; 30.06.2023 DE 102023117409
(71) Anmelder: MTU Aero Engines AG, 80995 München (DE)
(72) Erfinder: Bolgar, Istvan, 80995 München (DE); Woitalka, Alexander, 80995 München (DE); Schuldt, Simon, 80995 München (DE)

(57) **Zusammenfassung**

Die Erfindung betrifft eine Strömungsmaschine (1) für einen Flugantrieb mit einem von einer Gasströmung (S) in einer Strömungsrichtung (R) der Strömungsmaschine (1) durchströmten Verdichter (3), Brennraum (4), Turbine (5) und einem der Turbine (5) nachgelagerten Wärmetauscher (8), wobei der Wärmetauscher (8) eingerichtet ist, aus einem Wasser (W) mittels einer Energie der Gasströmung (S) einen Wasserdampf zu erzeugen, welcher der Gasströmung (S) zum Verbrennen im Brennraum (4) mit Brennstoff zuführbar ist.

## Beschreibung

Die Erfindung betrifft eine Strömungsmaschine für einen Flugantrieb mit einem von einer Gasströmung in einer Strömungsrichtung der Strömungsmaschine durchströmten Verdichter, Brennraum, Turbine und einem der Turbine nachgelagerten Wärmetauscher, wobei der Wärmetauscher eingerichtet ist, aus einem Wasser mittels einer Energie der Gasströmung einen Dampf zu erzeugen, welcher der Gasströmung zum Verbrennen im Brennraum mit Brennstoff zuführbar ist.

Um die Umweltwirkung des Flugverkehrs zu verbessern, bestehen Bestrebungen bei Flugantrieben das Medium Wasser bzw. Wasserdampf zur Leistungssteigerung und zur Emissionssenkung zu nutzen. Beispielsweise setzt die "Water-Enhanced Turbofan (WET)"-Technologie auf eine Wassereinspritzung in eine Brennkammer. Hierbei kann in einem stromabwärts einer Triebwerksturbine angeordneten Dampferzeuger mittels Abgasenergie Wasserdampf erzeugt werden, der im Bereich der Brennkammer zugeführt wird. Nach einem Durchströmen des Dampferzeugers kann feuchtes Abgas weitere Komponenten durchströmen, die dazu dienen, Wasser aus dem Abgas abzuscheiden. Für diese WET-Konzepte sind eine effiziente Rückgewinnung des im Abgas vorhandenen Wassers und eine wirkungsgradoptimierte Nutzung der in dem Abgas der Strömungsmaschine vorhandenen Energie zur Erzeugung von Wasserdampf aus dem rückgewonnenen Wasser Grundvoraussetzungen.

Hiervon ausgehend ist es eine Aufgabe der vorliegenden Erfindung, eine verbesserte Strömungsmaschine für einen Flugantrieb vorzuschlagen, bei welcher insbesondere eine Bauraumnutzung und/ oder ein Wirkungsgrad verbessert werden soll. Dies wird erfindungsgemäß durch die Lehre des unabhängigen Anspruchs erreicht. Vorteilhafte Ausführungen der Erfindung sind Gegenstand der Unteransprüche.

Zur Lösung der Aufgabe wird eine Strömungsmaschine für einen Flugantrieb mit einem von einer Gasströmung in einer Strömungsrichtung der Strömungsmaschine durchströmten Verdichter, Brennraum, Turbine und einem der Turbine nachgelagerten Wärmetauscher vorgeschlagen, wobei der Wärmetauscher eingerichtet ist, aus einem Wasser mittels einer Energie der Gasströmung einen Wasserdampf zu erzeugen, welcher der Gasströmung zum Verbrennen im Brennraum mit Brennstoff zuführbar ist. Der Wärmetauscher weist dabei einen sich wenigstens überwiegend horizontal erstreckenden Wärmetauschbereich auf, der wenigstens einen von dem Wasser durchströmbaren Strömungskanal aufweist, wobei jeder Strömungskanal im Wesentlichen in wenigstens einer sich horizontal erstreckenden Ebene verläuft, und der Wärmetauscher derart ausgebildet ist, dass der wenigstens eine, insbesondere jeder Strömungskanal von der Gasströmung in einer Richtung senkrecht zu der wenigstens einen Ebene umströmbar ist.

Hierdurch kann, insbesondere im Wärmetauschbereich, jede der Fluidströmungen, also das Wasser und die Gasströmung, in diskreten Strömungswegen in einem im Wesentlichen rechten Winkel zueinander fließen bzw. geleitet werden, wodurch eine Wärmeübertragung im Kreuzstrom des Wassers und der Gasströmung ermöglicht wird. Kreuzstrom bedeutet im Sinne der Erfindung, dass die beiden Strömungen bzw. Fluidströme in einem Winkel im Bereich von etwa 90° zu einander strömen bzw. fließen. Hierbei sind durchschnittliche, strömungsbedingte und/ oder konstruktiv nicht vermeidbare Abweichungen im Bereich bis plus/ minus 10° bis hin zu plus/ minus 30° von einem 90°-Winkel umfasst. Durch die Wärmeübertragung im Kreuzstrom kann das Wasser bzw. der Wasserdampf betriebssicher und effizient auf eine vorbestimmte Temperatur gebracht werden.

Der hier betrachtete Wärmetauscher stellt insbesondere einen Verdampfer dar. Durch die vorgeschlagene Ausgestaltung des Wärmetauschers kann dieser, im Gegensatz zu einer bekannten rotationsymmetrischen Ausprägung, eine im Wesentlichen flächige oder insbesondere kubische Geometrie aufweisen, wodurch eine räumliche Integration in die Strömungsmaschine und/ oder ein Zusammenspiel mit weiteren Komponenten der Strömungsmaschine verbessert werden kann. Beispielsweise kann der Wärmetauscher durch die vorgeschlagene Anordnung der Fluidströmungen zueinander bzw. die Strömungswege als kompaktes Modul ausgestaltet und/ oder mit weiteren Wärmeübertragungseinrichtungen der Strömungsmaschine in Reihe geschaltet werden. Somit kann beispielsweise eine Anzahl, eine Länge und/ oder Komplexität von strömungsführenden Rohrleitungen bzw. Kanälen zwischen zwei Wärmeübertragungseinrichtungen reduziert werden. Hierdurch können Druck- und Wärmeverluste verringert und/ oder eine Gewichtseinsparung, insbesondere im Vergleich zu bekannten Strömungsmaschinen, ermöglicht werden.

Eine Strömungsmaschine für einen Flugantrieb weist einen Verdichter, einen Brennraum und eine Turbine auf. Während des Betriebs der Strömungsmaschine wird Luft in einem Verdichter komprimiert, in dem Brennraum mit Brennstoff vermischt und gezündet, um die Turbine anzutreiben. Ferner kann die Strömungsmaschine ein Brennstoffaufbereitungssystem zum Aufbereiten des Brennstoffs vor dessen Verbrennung im Brennraum aufweisen, welches insbesondere den im Wärmetauscher erzeugten Wasserdampf verwenden kann. Die vorgeschlagene Strömungsmaschine weist zudem einen stromabwärts der Turbine angeordneten Wärmetauscher auf, in welchem, insbesondere der Gasströmung bzw. dem Abgas der Strömungsmaschine entzogenes und dem Wärmetauscher bereitgestelltes Wasser mithilfe der Energie der Gasströmung zu Wasserdampf umwandelbar ist. Im Rahmen der vorliegenden Offenbarung wird die Gasströmung nach Verlassen der Turbine insbesondere auch als Abgas oder Abgasströmung bezeichnet.

Ein Flugantrieb bzw. ein Flugtriebwerk kann eine solche, insbesondere axiale Strömungsmaschine aufweisen, wobei die Strömungsmaschine eine Abgasbehandlungseinrichtung aufweisen kann, die der Turbine der Strömungsmaschine insbesondere nachgelagert angeordnet ist. Die Abgasbehandlungseinrichtung kann einen Wärmetauscher, eine Kühleinrichtung und eine Wasserabscheideeinrichtung umfassen. Die Gasströmung kann den Wärmetauscher, die Kühleinrichtung und die Wasserabscheideeinrichtung nacheinander durchströmen. Entsprechend können der Wärmetauscher, die Kühleinrichtung und die Wasserabscheideeinrichtung in der Strömungsrichtung der Strömungsmaschine wenigstens teilweise an einem Abgaskanal der Abgasbehandlungseinrichtung angeordnet sein. Die Gasströmung nach der Turbine bzw. ein Abgas des Flugtriebwerks bzw. der Turbine kann mittels des Wärmetauschers auf eine Temperatur unterhalb der Temperatur beim Austreten aus der Turbine bzw. einer ursprünglichen Abgastemperatur abgekühlt werden. Hierbei wird der Gasströmung im Wärmetauscher Energie entzogen, welche zum Erzeugen von Wasserdampf genutzt wird, wodurch die Temperatur der Gasströmung sinkt.

Die dem Wärmetauscher in Strömungsrichtung nachgelagerte Kühleinrichtung kann dabei als Kondensator (Kondensatorwärmetauscher) ausgebildet sein oder einen solchen aufweisen und Umgebungsluft als Kühlfluid nutzen, welche beispielsweise mittels eines Gebläses oder eines Fans des Flugtriebwerks gefördert wird. Dieser Kondensatorwärmetauscher kann im Wesentlichen zwei Bereiche aufweisen, wobei in einem stromaufwärts angeordneten ersten Bereich eine (weitere) Abkühlung der im Wesentlichen gasförmigen Abgasströmung stattfindet. In einem dem ersten Bereich nachgelagerten zweiten Bereich wird die Abgasströmung abgekühlt, so dass flüssige Wasseranteile in der Abgasströmung vorliegen, welche aus der Abgasströmung abgeschieden werden können. Der flüssige Wasseranteil kann in der Wasserabscheideeinrichtung von der Gasströmung getrennt werden und an dem Wärmetauscher zur Dampferzeugung bereitgestellt werden. Das abgeschiedene Wasser kann dem Dampferzeuger bzw. dem Wärmetauscher beispielsweise mittels einer Zuführeinrichtung bereitgestellt werden, wobei das Wasser optional über ein Wasseraufbereitungssystem in einen Wasserspeicher geführt werden kann, wo es für eine weitere Verwendung zur Verfügung stehen kann. Damit kann das dem Wärmetauscher zuzuführende bzw. zugeführte Wasser zumindest teilweise in einem Kreislauf gehalten werden, wodurch eine zusätzliche Wasserversorgung für den Verbrennungsprozess entfallen kann.

Wenigstens ein Teil des im Wärmetauscher erzeugten Wasserdampfs kann insbesondere über eine Dampfleitung bzw. Dampfzuführung in eine Mischkammer eines Brennstoffaufbereitungssystems geleitet werden. In diese Mischkammer kann Brennstoff eingebracht und dem dort eingebrachten Wasserdampf zugeführt werden, wobei der Brennstoff verdampfen kann. Aus dem Wasserdampf und dem Brennstoff kann somit ein Gemisch gebildet werden, welches schließlich dem Brennraum der Strömungsmaschine zur Verbrennung zugeführt werden kann. In manchen Ausführungsformen kann der Wasserdampf der Gasströmung auch vor und/ oder in dem Brennraum zugeführt werden.

Der Wärmetauscher übernimmt in einer Strömungsmaschine, welche insbesondere ein WET-Konzept nutzt, im Wesentlichen zwei Funktionen: Zum einen wird der Gasströmung Energie entzogen, wodurch die Temperatur der Gasströmung abnimmt, um Wasser aus der Gasströmung rückgewinnen zu können. Zum anderen wird diese Energie genutzt, um das, insbesondere der Gasströmung entzogene, Wasser zu erhitzen und/ oder zu verdampfen, um dieses für die Verbrennung in der Brennkammer bereitstellen zu können.

Vor diesem Hintergrund beruht die Erfindung unter anderem auf der Idee, eine Fluidführung im Wärmetauschbereich des Wärmetauschers derart zu gestalten, dass sich eine Strömungskonfiguration eines Kreuzstromwärmetauschers ergibt. Innerhalb des wenigstens einen Strömungskanals kann das Wasser im Kreuzstrom relativ zum Abgas bzw. der Gasströmung, welche(s) an der Außenseite des wenigstens einen Strömungskanals strömt, fließen bzw. strömen. Die Wärmeübertragung zwischen Wasser und Gasströmung kann dabei primär in dem sich horizontal erstreckenden Wärmetauschbereich stattfinden, in welchem der wenigstens eine Strömungskanal von der Gasströmung umströmt bzw. gekreuzt werden kann und dabei Wärme insbesondere mittels Konvektion von der Gasströmung an das Wasser abgegeben werden kann. Mittels des so bereitgestellten Kreuzstroms kann ein Temperaturunterschied zwischen der Gasströmung und dem zu verdampfenden Wasser in dem Wärmetauscher genutzt werden, um das Wasser zu verdampfen und insbesondere auf eine vorbestimmte Temperatur zu erhitzen. Hierdurch kann eine Dampferzeugung bzw. eine Überhitzung des im Wärmetauscher erzeugten Wasserdampfs effizienter gestaltet werden.

Der Wärmetauschbereich des Wärmetauschers sowie der darin angeordnete wenigstens eine Strömungskanal erstrecken sich in der Strömungsmaschine - insbesondere im Stand des Flugzeugs oder im Reiseflugbetrieb der Strömungsmaschine - in einer sich horizontal erstreckenden Ebene. Hierbei wird im Zusammenhang mit dieser Erfindung davon ausgegangen, dass auch die Rotationsachse und damit die Strömungsrichtung der Strömungsmaschine im Stand des Flugzeugs oder während des Reiseflugs horizontal und damit parallel zu einer Erstreckung des Wärmetauschbereichs angeordnet ist. Der Wärmetauschbereich und der wenigstens eine darin angeordnete Strömungskanal weisen also eine Längs- und/ oder Quererstreckung auf, die insbesondere größer ist/ sind als deren vertikale Erstreckung und/ oder erstreckt/ erstrecken sich im Wesentlichen parallel zu einer Tangente der Erdoberfläche. Hierdurch kann sich insbesondere auch in Verbindung mit der vorgeschlagenen Strömungskonfiguration eine wenigstens im Wesentlichen quaderförmige Geometrie des Wärmetauschers ergeben, wodurch dieser verbessert in einen Bauraum der Strömungsmaschine integrierbar sein kann. Durch die vorgeschlagene Ausgestaltung kann der Wärmetauscher kleiner und leichter dimensioniert werden, wodurch eine Gewichtsreduktion des Wärmetauschers und somit der Strömungsmaschine erzielbar ist. In der Gesamtbetrachtung kann hierdurch ein höherer thermischer Wirkungsgrad der Strömungsmaschine durch Nutzung der Abgasenergie erzielt und auch die Bildung von Kondensstreifen minimiert werden.

Bei einer Ausführungsform weist der wenigstens eine Strömungskanal wenigstens zwei zueinander parallel angeordnete Abschnitte auf, die in mehreren parallelen, sich horizontal erstreckenden Ebenen verlaufen. Dabei sind die Abschnitte miteinander verbunden, sodass das Wasser die Abschnitte des wenigstens einen Strömungskanals nacheinander, insbesondere mäandernd, durchströmen kann. Hierdurch kann das Wasser mit der Gasströmung eine Strömungskonfiguration eines Kreuzgegenstromwärmetauschers ausbilden, wobei das Wasser in zwei benachbarten Abschnitten in horizontal entgegengesetzte Richtungen strömen bzw. geführt werden kann und von der Gasströmung senkrecht zu den Abschnitten umströmbar ist. Somit kann eine Kontaktzeit zwischen Strömungskanal und Gasstrom für den Wärmeübertragungsprozess verlängert werden, wodurch ein Temperaturwirkungsgrad erhöht und eine Effizienz der Wärmeübertragung gesteigert werden kann.

Bei einer Ausführungsform verläuft der wenigstens eine Strömungskanal im Wesentlichen parallel zu der Strömungsrichtung der Strömungsmaschine. Diese globale Strömungsrichtung der Strömungsmaschine erstreckt sich hierbei im Wesentlichen parallel zur Drehachse der Strömungsmaschine. Hierdurch kann eine homogene Strömungsverteilung einer insbesondere im Wesentlichen vertikal ausgerichteten Gasströmung in Bezug auf den wenigstens einen Strömungskanal erreicht werden, um gleichmäßige Wärmemengen über den wenigstens einen Strömungskanal auf das Wasser zu übertragen.

Bei einer Ausführungsform weist der Wärmetauscher mehrere parallel zueinander angeordnete Strömungskanäle auf, wobei die Strömungskanäle insbesondere gleichmäßig beabstandet zueinander angeordnet sind. Hierbei können die Strömungskanäle identisch ausgebildet und in einer oder mehreren insbesondere vertikal ausgerichteten parallelen Ebenen benachbart zueinander angeordnet sein. Bei dieser Ausprägung kann die Gasströmung gleichzeitig mehrere Strömungskanäle insbesondere homogen und/ oder gleichmäßig an- bzw. umströmen, und so eine geeignete Wärmeübertragung ermöglichen. Dabei kann der Wärmetauscher beispielsweise als Rohrbündelwärmetauscher bzw. Rohrbündelwärmeübertrager ausgebildet sein, wobei die Strömungskanäle das bzw. die Rohrbündel ausbilden.

Bei einer Ausführungsform ist das Wasser in dem Wärmetauschbereich des Wärmetauschers mittels des wenigstens einen Strömungskanals im Wesentlichen entgegen der Richtung der Gravitation führbar. Die Gravitation bzw. Gravitationskraft ist senkrecht zur Erdoberfläche hin gerichtet und steht damit senkrecht zu jeder horizontalen Ebene. Der wenigstens eine Strömungskanal weist dazu insbesondere mehrere parallele bzw. in mehreren parallelen horizontalen Ebenen angeordnete Abschnitte auf, wobei das Wasser dem wenigstens einen Strömungskanal in einer untersten Ebene zugeführt wird. Dabei wird das Wasser dem wenigstens einen Strömungskanal üblicherweise in flüssigem Zustand zugeführt, wobei das Wasser beim Durchströmen des Strömungskanals durch die zunehmende Wärmezufuhr durch die Gasströmung verdampft bzw. in einen gasförmigen Aggregatzustand versetzt wird. Beim Verdampfen durchläuft das Wasser inhärent verschiedene Phasenzustände. Durch diese Phasenveränderung können Änderungen der Stoffgrößen, insbesondere einer Dichte, eines Volumens und einer Strömungsgeschwindigkeit des Wassers auftreten. Solche Änderungen können bei der Führung des Wassers entgegen der Richtung der Gravitation genutzt werden und diese unterstützen.

Bei einer Ausführungsform ist die Gasströmung in dem Wärmetauschbereich des Wärmetauschers mittels des Wärmetauschers wenigstens abschnittsweise in Richtung der Gravitation führbar. Hierbei kann die Gasströmung beim Eintritt in den Wärmetauschbereich die heißeste Temperatur aufweisen und somit in einem oberen, dem Eintritt zugewandten, Bereich des wenigstens einen Strömungskanals die meiste Energie bzw. Wärme abgeben. Insbesondere wenn das Wasser in dem wenigstens einen Strömungskanal entgegen der Richtung der Gravitation geführt wird, steht die größte Wärmemenge in einem Bereich zur Verfügung, in welchem das Wasser insbesondere bereits überwiegend in dampfförmigen Zustand vorliegt,. Somit kann im Wärmetauscher überhitzter Wasserdampf aus der Abgasenergie in der Turbine erzeugt werden, welcher eine hohe Energiedichte aufweist.

Bei einer Ausführungsform ist die Gasströmung mittels eines Sammelrohrs des Wärmetauschers von der Turbine zu dem wenigstens einen Strömungskanal bzw. dem Wärmetauschbereich des Wärmetauschers führbar. Die Gasströmung kann beim Austreten aus der Turbine, insbesondere beim Austreten aus einer Niederdruckturbine, eine Temperatur zwischen 800 und 980 K aufweisen. Mittels des Sammelrohrs kann die Gasströmung direkt und verlustreduziert zu dem wenigstens einen Strömungskanal bzw. dem Wärmetauschbereich des Wärmetauschers geführt werden, um die vorhandene Energie zum Erzeugen des Wasserdampfs bereitzustellen. Hierdurch kann überhitzter Wasserdampf mit einer hohen Energiedichte erzeugt werden, so dass eine unerwünschte Kondensation des verdampften Wassers beispielsweise im Bereich des Brennstoffaufbereitungssystems bis zur Verbrennung des im Gemisch enthaltenen Brennstoffs im Brennraum vermieden werden kann.

Bei einer Ausführungsform weist das Sammelrohr eine Umlenkeinrichtung auf, mittels welcher die Gasströmung derart umlenkbar ist, dass diese im Wesentlichen senkrecht zu der wenigstens einen sich horizontal ersteckenden Ebene, in welcher insbesondere der wenigstens eine Strömungskanal und/ oder dessen Abschnitt(e) angerordnet ist/ sind, in den Wärmetauschbereich des Wärmetauschers einleitbar ist. Hierbei kann mittels der Umlenkeinrichtung des Sammelrohrs des Wärmetauschers und gegebenenfalls zusätzlich oder alternativ durch geeignete Mittel in dem Wärmetauschbereich eine Umlenkung der Gasströmung von bzw. in Bezug auf die Strömungsrichtung bzw. eine Hauptströmungsachse der Strömungsmaschine erzielt werden, um die Wärmeübertragung im Kreuzstrom zu ermöglichen.

Bei einer Ausführungsform ist der Wärmetauschbereich des Wärmetauschers im Wesentlichen planar ausgebildet. Hierbei weist der Wärmetauschbereich eine insbesondere flächige und/ oder quaderförmige Gestaltung mit einer überwiegend horizontalen Erstreckung auf bzw. ist im Wesentlichen flächig und/ oder quaderförmig mit einer überwiegend horizontalen Erstreckung (flach) ausgebildet. Insbesondere weist damit auch der Wärmetauscher eine insgesamt flächige und/ oder quaderförmige Gestaltung mit einer überwiegend horizontalen Erstreckung auf. Hierdurch kann beispielsweise eine bauliche Integration in die Abgasbehandlungseinrichtung und ein Zusammenwirken mit weiteren Komponenten im WET-Konzept, wie beispielsweise dem Kondensator, insbesondere durch die geänderte Strömungsführung der Gasströmung, verbessert werden. So können beispielsweise gasströmungsführende Kanäle zwischen dem Wärmetauscher und dem Kondensator eingespart werden, wodurch Druck- und Wärmeverluste reduzierbar sind.

Im Sinne der vorliegenden Offenbarung wird eine horizontale Ausrichtung von Komponenten und/ oder Ebenen in einer üblichen Ausrichtung eines Flugzeugs bzw. des Flugantriebs während eines Reiseflugbetriebs verstanden. Abweichungen von der horizontalen Ausrichtung, welche sich durch eine abweichende Raumlage des Flugzeugs bzw. des Flugantriebs ergeben, sind selbstverständlich von der Offenbarung umfasst.

Weitere Merkmale, Vorteile und Anwendungsmöglichkeiten der Offenbarung ergeben sich aus der nachfolgenden Beschreibung im Zusammenhang mit den Figuren. Im Allgemeinen gilt, dass Merkmale der verschiedenen hierin beschriebenen beispielhaften Aspekte und/oder Ausführungsformen miteinander kombiniert werden können, sofern dies im Zusammenhang mit der Offenbarung nicht eindeutig ausgeschlossen ist.

Im folgenden Teil der Beschreibung wird auf die Figuren Bezug genommen, die zur Veranschaulichung spezifischer Aspekte und Ausführungsformen der vorliegenden Offenbarung gezeigt sind. Es versteht sich, dass andere Aspekte verwendet werden können und strukturelle oder logische Änderungen der illustrierten Ausführungsformen möglich sind, ohne den Umfang der vorliegenden Offenbarung zu verlassen. Die folgende Beschreibung der Figuren ist daher nicht einschränkend zu verstehen. Es zeigt
- Fig. 1: eine schematische Darstellung einer beispielhaften erfindungsgemäßen Strömungsmaschine für einen Flugantrieb.
- Fig. 2a, 2b: zeigen jeweils eine schematische Darstellung eines Wärmetauschers einer Strömungsmaschine gemäß eines Ausführungsbeispiels der vorliegenden Offenbarung; und
- Fig. 3a, 3b: zeigen jeweils eine schematische Darstellung einer Schnittebene A bzw. B aus Fig. 2b eines Wärmetauschbereichs eines Wärmetauschers einer Strömungsmaschine gemäß eines Ausführungsbeispiels der vorliegenden Offenbarung.

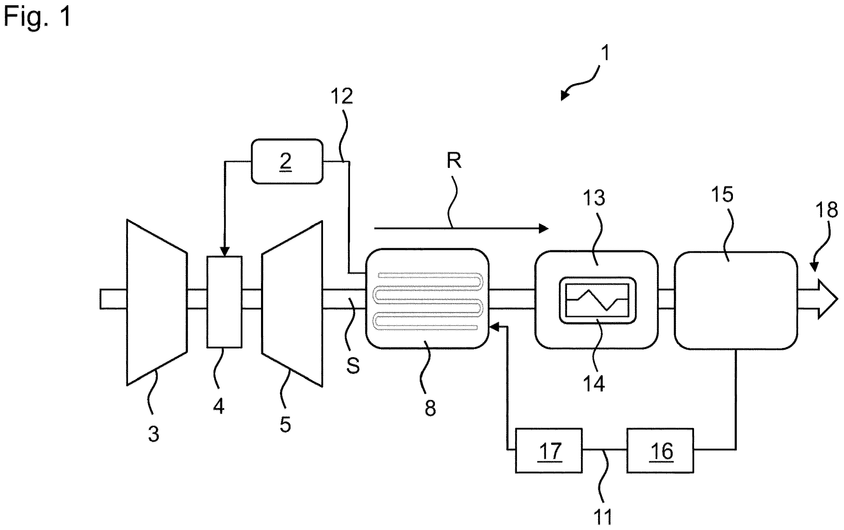

**Fig. 1** zeigt eine erfindungsgemäße Strömungsmaschine 1 für einen Flugantrieb in einer schematischen Darstellung.

Die Strömungsmaschine 1 ist beispielsweise als Mantelstromtriebwerk ausgebildet und weist einen Verdichter 3, einen Brennraum 4 und eine Turbine 5 auf, die von einer Gasströmung S in einer Strömungsrichtung R der Strömungsmaschine 1 durchströmbar sind bzw. in einem Betrieb der Strömungsmaschine 1 von der Gasströmung S durchströmt werden. Der Turbine 5 in der Strömungsrichtung R nachgelagert, weist die Strömungsmaschine 1 einen als Verdampfer ausgeführten Wärmetauscher 8 auf, der eingerichtet ist, aus einem Wasser mittels einer Energie der Gasströmung S Wasserdampf zu erzeugen.

Dieser Wasserdampf kann über eine Dampfzuführung 12, insbesondere zusammen mit einem Brennstoff in die Gasströmung S zum Verbrennen im Brennraum 4 zugeführt werden. Die Dampfzuführung 12 kann eine Mischkammer 2 einer Brennstoffaufbereitungseinrichtung aufweisen, in welche Brennstoff eingebracht und so dem dort eingebrachten Dampf zugeführt werden kann, wobei der Brennstoff verdampfen kann. Aus dem Dampf und dem Brennstoff kann somit ein Gemisch gebildet werden, welches dem Brennraum 4 der Strömungsmaschine 1 zugeführt wird. In manchen Ausführungsformen kann der Wasserdampf auch vor und/oder in dem Brennraum 4 der Gasströmung S zugeführt werden.

Bezogen auf eine mittels eines Pfeils illustrierte globale Strömungsrichtung R der Gasströmung S, passiert die Gasströmung S zunächst den Verdichter 3, den Brennraum 4 und die Turbine 5. Nach der Turbine 5 kann die Gasströmung S auch als Abgasströmung der Strömungsmaschine 1 bezeichnet werden. Diese (Ab-)Gasströmung S kann von der Turbine 5 in den Wärmetauscher 8 strömen, welchem eine Kühleinrichtung 13 und eine Wasserabscheideeinrichtung 15 in Strömungsrichtung der Gasströmung S nachgelagert angeordnet sind.

Die Kühleinrichtung 13 kann einen zur Kühlung mit Umgebungsluft eingerichteten Kondensator 14 aufweisen, um ein in der Gasströmung S vorliegendes Wasser abzuscheiden. Der Kühleinrichtung 13 nachgelagert ist in dem vorliegenden Ausführungsbeispiel eine Wasserabscheideeinrichtung 15 angeordnet, die als Tropfenabscheider ausgebildet sein kann, um das Wasser zu sammeln. Die verbleibende Gasströmung S kann die Strömungsmaschine 1 über einen Auslass 18 verlassen und insbesondere an die Umgebung abgegeben werden.

Das abgeschiedene Wasser kann beispielsweise über ein optional vorhandenes Wasseraufbereitungssystem 16 in einen Wasserspeicher 17 geführt werden, wo es für eine weitere Verwendung zur Verfügung steht. Mittels einer Zuführeinrichtung 11 kann das Wasser dem Wärmetauscher 8 bereitgestellt werden, um Wasserdampf zu erzeugen, der im Bereich des Brennraums 4 der Gasströmung S zuführbar ist.

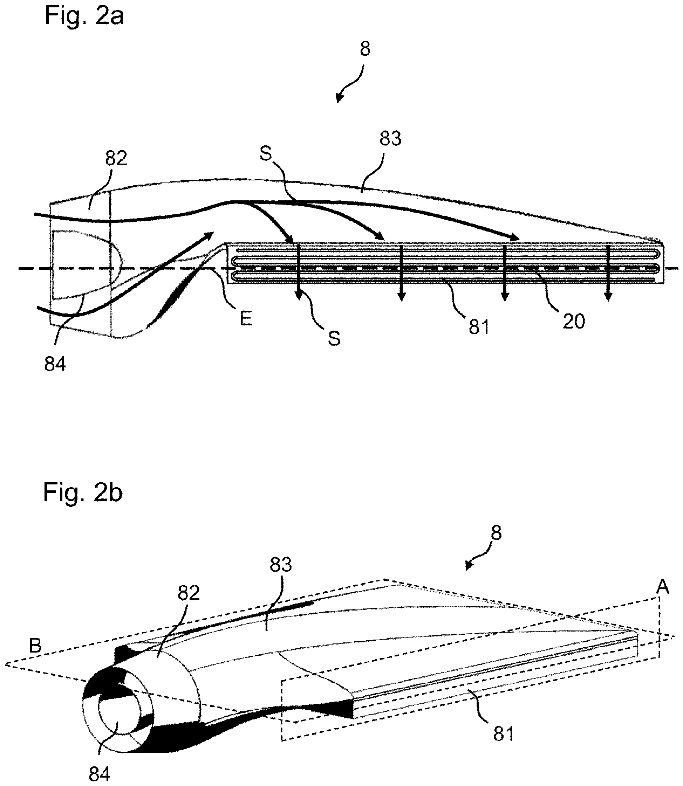

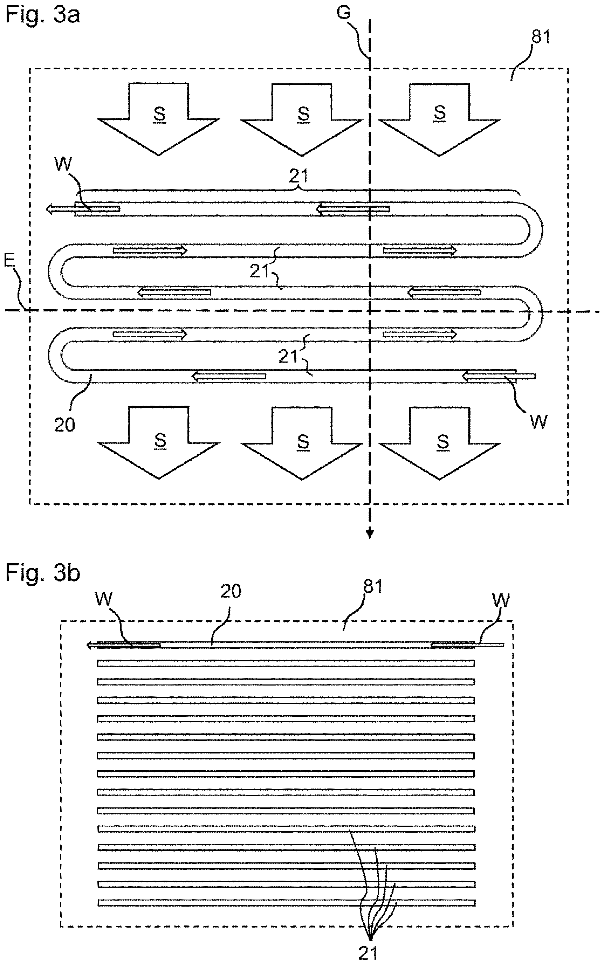

Der Wärmetauscher 8 wird nachfolgend im Zusammenhang mit den Figuren Fig. 2a, 2b und Fig. 3a, 3b näher beschrieben.

**Fig. 2a und 2b** zeigen schematische Darstellungen eines Ausführungsbeispiels eines Wärmetauschers 8 wie er in einer in Fig. 1 dargestellten Strömungsmaschine 1 vorgesehen sein kann.

In Fig. 2a ist der Wärmetauscher in Richtung einer horizontalen Ebene E betrachtet dargestellt, wobei exemplarisch eine Linie zur Illustration der horizontalen Ebene E eingezeichnet ist. Der Wärmetauschbereich 81 des Wärmetauschers 8 ist im Wesentlichen planar ausgebildet und erstreckt sich im Wesentlichen horizontal, also hier senkrecht zur Zeichnungsebene. In dem Wärmetauschbereich 81 (hier in einer schematischen Teilschnittansicht dargestellt) ist wenigstens ein von Wasser durchströmbarer Strömungskanal 20 angeordnet, wobei jeder Strömungskanal 20 in der beispielhaften Darstellung der Fig. 2a im Wesentlichen in fünf sich (im Einbauzustand in der Strömungsmaschine) horizontal erstreckenden Ebenen E verläuft. Dabei ist der Wärmetauscher 8 derart ausgebildet, dass der wenigstens eine Strömungskanal 20 von der Gasströmung S in einer Richtung senkrecht zu der wenigstens einen horizontalen Ebene E umströmbar ist.

An einem der Turbine 5 zugewandten Ende weist der Wärmetauscher 8 ein Sammelrohr 82 auf, mittels welchem die Gasströmung S von der Turbine 5 zu dem wenigstens einen Strömungskanal 20 bzw. zu dem Wärmetauschbereich 81 führbar ist. Das Sammelrohr 82 bzw. der Wärmetauscher 8 weist eine Umlenkeinrichtung 83 in Form einer Gehäusekrümmung auf, mittels welcher die Gasströmung S im Wesentlichen senkrecht zu der wenigstens einen sich horizontal ersteckenden Ebene E in den Wärmetauschbereich 81 des Wärmetauschers 8 einleitbar ist, um die Strömungskanäle 20 zu umströmen und so eine Wärmeübertragung zwischen der Gasströmung S und dem Wasser zu ermöglichen.

Fig. 2b zeigt eine perspektivische Darstellung des Ausführungsbeispiels eines Wärmetauschers 8 aus Fig. 2a. In dem Sammelrohr 82 ist ein Leitelement 84 angeordnet, über welches die aus der Turbine 5 strömende Gasströmung S in die Umlenkeinrichtung 83 geleitet werden kann. Das Sammelrohr 82 bildet zusammen mit der Umlenkeinrichtung 83 und dem Wärmetauschbereich 81 eine im Wesentlichen flächige bzw. flache quaderförmige Außengeometrie auf, wodurch eine räumliche Integrationsfähigkeit des Wärmetauschers 8 in einen Bauraum der Strömungsmaschine 1 verbessert ist.

**Fig. 3a** zeigt eine schematische Darstellung einer in Fig. 2b dargestellten Schnittebene A eines Ausführungsbeispiels eines Wärmetauschbereichs 81 eines Wärmetauschers 8, wie er in einer Strömungsmaschine 1 der Fig. 1 bzw. einem Wärmetauscher 8 der Fig. 2a und 2b vorgesehen sein kann.

Der Wärmetauschbereich 81 erstreckt sich in der exemplarisch eingezeichneten horizontalen Ebene E und weist den wenigstens einen von dem Wasser W (illustriert durch Pfeile) durchströmbaren Strömungskanal 20 auf. Dieser Strömungskanal 20 verläuft in der Darstellung in Fig. 3a abgesehen von seitlichen Verbindungsbereichen in fünf Ebenen, welche parallel zu der sich horizontal erstreckenden Ebene E angeordnet sind. Dabei weist der Strömungskanal 20 hier fünf zueinander parallel angeordnete Abschnitte 21 auf, die parallel zu der sich horizontal erstreckenden Ebenen E verlaufen. Die Abschnitte 21 sind jeweils miteinander verbunden, so dass das Wasser W die Abschnitte 21 nacheinander durchströmen kann, wobei das Wasser W in jeweils zwei benachbarten Abschnitten 21 in entgegengesetzte Richtungen strömt. Zudem können mehrere Strömungskanäle 20 parallel zueinander und insbesondere senkrecht beabstandet zur Zeichnungsebene der Fig. 3a angeordnet sein.

Der Wärmetauscher 8 und insbesondere der Wärmetauschbereich 81 sind derart ausgebildet, dass der wenigstens eine Strömungskanal 20 von der Gasströmung S in einer Richtung senkrecht zu der wenigstens einen Ebene E umströmbar ist. Bei der dargestellten Ausführung ist die Gasströmung S in dem Wärmetauschbereich 81 in Richtung der Gravitation G führbar bzw. strömt in Richtung der Gravitation. Die Gravitation G bzw. die Gravitationskraft (exemplarisch mittels eines Pfeils dargestellt) ist senkrecht zur Erdoberfläche gerichtet und steht damit senkrecht zu jeder horizontalen Ebene E.

Zudem ist bei der beispielhaft dargestellten Ausführung das Wasser W wenigstens in dem Wärmetauschbereich 81 des Wärmetauschers 8 mittels des wenigstens einen Strömungskanals 20 im Wesentlichen entgegen der Richtung der Gravitation G führbar. Hierbei kann das Wasser W insbesondere jedem der Strömungskanäle 20 in einem untersten Abschnitt 21 zugeführt werden und die parallelen Abschnitte 21 nacheinander durchströmen, um den Strömungskanal 20 über einen obersten Abschnitt 21 zu verlassen. Hierbei können durch die Wärmeaufnahme und Verdampfung hervorgerufene Änderungen von Fluid- bzw. Stoffgrößen des Wassers W genutzt werden, um das Wasser W entgegen der Richtung der Gravitation G zu führen. Hierdurch ergibt sich für den Wärmetauschbereich 81 des Wärmetauschers 8 eine Wärmeübertragung im Kreuzgegenstrom des Wassers W und der Gasströmung S. Dabei strömen das Wasser W und die Gasströmung S im Wesentlichen in einem 90° Winkel zueinander, wobei stellenweise Abweichungen beispielsweise im Bereich bis hin zu plus/ minus 30° eingeschlossen sind.

**Fig. 3b** zeigt eine schematische Darstellung einer in Fig. 2b dargestellten Schnittebene B eines Ausführungsbeispiels eines Wärmetauschbereichs 81 eines Wärmetauschers 8 wie er in einer Strömungsmaschine 1 der Fig. 1 bzw. einem Wärmetauscher 8 der Fig. 2a und 2b vorgesehen sein kann.

Der Wärmetauschbereich 81 erstreckt sich in einer horizontalen Ebene E und weist mehrere in dieser Ebene E mehrere zueinander parallel angeordnete, von dem Wasser W durchströmbare Strömungskanäle 20 auf, die jeweils mehrere in parallelen horizontalen Ebenen E angeordnete Abschnitte 21 (vgl. Fig. 3a) aufweisen. Die Gasströmung S umströmt die Strömungskanäle 20 in einer Richtung senkrecht zur Zeichnungsebene bzw. zur Ebene E , um Energie an das Wasser abzugeben.

### BEZUGSZEICHENLISTE

- 1: Strömungsmaschine
- 2: Mischkammer
- 3: Verdichter
- 4: Brennkammer
- 5: Turbine
- 8: Wärmetauscher
- 11: Zuführeinrichtung
- 12: Dampfzuführung
- 13: Kühleinrichtung
- 14: Kondensator
- 15: Wasserabscheideeinrichtung
- 16: Wasseraufbereitungssystem
- 17: Wasserspeicher
- 18: Auslass
- 20: Strömungskanal
- 21: Abschnitt des Strömungskanals
- 81: Wärmetauschbereich
- 82: Sammelrohr
- 83: Umlenkeinrichtung
- 84: Leitelement
- E: horizontale Ebene
- R: Strömungsrichtung der Strömungsmaschine
- S: Gasströmung
- W: Wasser

## Patentansprüche

1. Strömungsmaschine (1) für einen Flugantrieb mit einem von einer Gasströmung (S) in einer Strömungsrichtung (R) der Strömungsmaschine (1) durchströmten Verdichter (3), Brennraum (4), Turbine (5) und einem der Turbine (5) nachgelagerten Wärmetauscher (8), wobei der Wärmetauscher (8) eingerichtet ist, aus einem Wasser (W) mittels einer Energie der Gasströmung (S) einen Wasserdampf zu erzeugen, welcher der Gasströmung (S) zum Verbrennen im Brennraum (4) mit Brennstoff zuführbar ist, wobei der Wärmetauscher (8) einen sich horizontal erstreckenden Wärmetauschbereich (81) mit wenigstens einen von dem Wasser (W) durchströmbaren Strömungskanal (20), wobei jeder Strömungskanal (20) im Wesentlichen in wenigstens einer sich horizontal erstreckenden Ebene (E) verläuft, und der Wärmetauscher (8) derart ausgebildet ist, dass der wenigstens eine Strömungskanal (20) von der Gasströmung (S) in einer Richtung senkrecht zu der wenigstens einen Ebene (E) umströmbar ist.

2. Strömungsmaschine (1) nach Anspruch 1, wobei der wenigstens eine Strömungskanal (20) wenigstens zwei zueinander parallel angeordnete Abschnitte (21) aufweist, die in mehreren parallelen sich horizontal erstreckenden Ebenen (E) verlaufen.

3. Strömungsmaschine (1) nach wenigstens einem der vorhergehenden Ansprüche, wobei der wenigstens eine Strömungskanal (20) im Wesentlichen parallel zu der Strömungsrichtung (R) der Strömungsmaschine (1) verläuft.

4. Strömungsmaschine (1) nach wenigstens einem der vorhergehenden Ansprüche, wobei der Wärmetauscher (8) mehrere parallel zueinander angeordnete Strömungskanäle (20) aufweist.

5. Strömungsmaschine (1) nach wenigstens einem der vorhergehenden Ansprüche, wobei das Wasser (W) in dem Wärmetauschbereich (81) des Wärmetauschers (8) mittels des wenigstens einen Strömungskanals (20) im Wesentlichen entgegen der Richtung der Gravitation (G) führbar ist.

6. Strömungsmaschine (1) nach wenigstens einem der vorhergehenden Ansprüche, wobei die Gasströmung (S) in dem Wärmetauschbereich (81) des Wärmetauschers (8) mittels des Wärmetauschers (8) wenigstens abschnittsweise in Richtung der Gravitation (G) führbar ist.

7. Strömungsmaschine (1) nach wenigstens einem der vorhergehenden Ansprüche, wobei die Gasströmung (S) mittels eines Sammelrohrs (82) des Wärmetauschers (8) von der Turbine (5) zu dem wenigstens einen Wärmetauschbereich (81) führbar ist.

8. Strömungsmaschine (1) nach dem vorhergehenden Anspruch, wobei das Sammelrohr (82) eine Umlenkeinrichtung (83) aufweist, mittels welcher die Gasströmung (S) derart umlenkbar ist, dass diese im Wesentlichen senkrecht zu der wenigstens einen sich horizontal ersteckenden Ebene (E) in den Wärmetauschbereich (81) des Wärmetauschers (8) einleitbar ist.

9. Strömungsmaschine (1) nach wenigstens einem der vorhergehenden Ansprüche, wobei der Wärmetauschbereich (81) des Wärmetauschers (8) im Wesentlichen planar ausgebildet ist.
